# EUROPÄISCHE PATENTSCHRIFT

(11) **EP 3 418 794 B1**
(45) Veröffentlichungstag und Bekanntmachung des Hinweises auf die Patenterteilung: **05.10.2022**
(21) Anmeldenummer: 18176514.0
(22) Anmeldetag: 07.06.2018
(51) Int. Cl.: G02B 27/09, B23K 26/073

(54) **MODULARES OPTISCHES BAUKASTENSYSTEM FÜR FOKUSNAHE STRAHLDICHTEVERTEILUNGEN MIT ALTERNIERENDEM STRAHLDICHTEPROFIL**
MODULAR OPTICAL MODULAR SYSTEM FOR FOCUS-CLOSE BEAM DENSITY PARTITIONS WITH ALTERNATING BEAM DENSITY PROFILE
SYSTÈME MODULAIRE OPTIQUE POUR DISTRIBUTIONS DE LA DENSITÉ DE RAYONNEMENT PROCHE DU FOYER À PROFIL DE DENSITÉ DE RAYONNEMENT ALTERNANT

(30) Priorität: 23.06.2017 DE 102017113945
(43) Veröffentlichungstag der Anmeldung: 26.12.2018
(73) Patentinhaber: asphericon GmbH, 07747 Jena (DE)
(72) Erfinder: Fuchs, Ulrike, 07745 Jena (DE); Kiontke, Sven, 07743 Jena (DE); Möhl, Anna, 07747 Jena (DE)
(74) Vertreter: Liedtke & Partner Patentanwälte

(56) Entgegenhaltungen:
- EP-A1- 2 790 050
- DE-B3-102008 048 323
- DE-U1-202004 013 136
- US-A- 5 864 430
- US-A1- 2012 206 786
- US-B1- 9 285 593

## Beschreibung

Die Erfindung betrifft ein optisches Baukastensystem zur Erzeugung von fokussierten Austrittsstrahlen, deren Strahldichte in einem Fokusbereich um eine Fokusebene oder Brennebene rotationssymmetrisch um die optische Achse verteilt ist, wobei die Strahldichte entlang eines Strahldichteprofils durch eine senkrecht zur optischen Achse liegende Bildebene ein Strahldichtemaximum, zwei Strahldichtemaxima oder einen zentralen Bereich konstanter Strahldichte aufweist.

Das Strahldichteprofil kann in einem zentralen Bereich um die optische Achse konstant sein und beidseits des zentralen Bereichs steil auf Null abfallen. Ein derartiges Strahldichteprofil soll im Folgenden als Top-Hat-Profil bezeichnet werden.

Das Strahldichteprofil kann bimodal ausgebildet sein, wobei beidseits eines auf der optischen Achse liegenden Strahldichteminimums jeweils ein Strahldichtemaximum angeordnet ist. Ein derartiges Strahldichteprofil soll im Folgenden als Donut-Profil bezeichnet werden.

Das Strahldichteprofil kann auch unimodal ausgebildet sein, wobei ein einziges Strahldichtemaximum auf der optischen Achse liegt. Ein derartiges Strahldichteprofil soll im Folgenden als Beam-Waist-Profil bezeichnet werden.

Die Gesamtheit derartiger Strahldichteprofile soll im Folgenden als alternierende Strahldichteprofile bezeichnet werden, da derartige Strahldichteprofile im Wesentlichen zwischen einem oberen Strahldichtewert und einem unteren Strahldichtewert alternieren.

Die Erfindung ist auch auf fokussierende Strahlformer gerichtet, mit denen verschiedene alternierende Strahldichteprofile in verschiedenen Bildebenen erzeugt werden, die entlang der optischen Achse um einen Fokuspunkt und jeweils senkrecht zur optischen Achse angeordnet sind.

Aus dem Stand der Technik sind fokussierende Strahlformer oder Focus Beam Shaper (FBS) bekannt, mit denen Bündel von kollimierten Eintrittsstrahlen, deren Verteilung in einer zur optischen Achse senkrechten Eintrittsebene durch eine Eintrittsstrahldichteverteilung mit einem rotationssymmetrischen Gaußprofil bestimmt ist, in Austrittsstrahlen transformiert werden, die in einer Fokusebene fokussiert sind, wobei die Strahldichteverteilung in der Fokusebene einem Top-Hat-Profil folgt.

Ferner sind Faserkollimatoren bekannt, mit denen Licht, das aus der Austrittsfläche einer optischen Faser in einem Raumwinkelbereich divergent austritt, der von der numerischen Apertur der optischen Faser bestimmt wird, kollimiert wird.

Aus dem Stand der Technik sind ferner Strahlaufweiter bekannt, mit denen der Durchmesser eines kollimierten Strahlenbündels verändert werden kann.

Zudem sind Verfahren und Vorrichtungen bekannt, mit denen optische Bauelemente, beispielsweise Strahlformer, Faserkollimatoren und/oder Strahlaufweiter miteinander verbunden oder gegeneinander fixiert sowie optisch justiert werden können. Beispielsweise sind optische Bänke bekannt, die Aufnahmevorrichtungen zur Aufnahme optischer Bauelemente sowie Fixiervorrichtungen umfassen, mittels derer solche Aufnahmevorrichtungen gegeneinander fixierbar sind. Es sind auch Verfahren bekannt, mit denen optische Bauelemente mit Hilfe von Autokollimationsfernrohren zueinander zentriert und so ausgerichtet werden können, dass die optischen Achsen der einzelnen Bauelemente fluchten.

Das Dokument EP 2 790 050 A1 beschreibt einen refraktiven Strahlformer umfassend mehrere, entlang der optischen Achse angeordnete Meniskuslinsen mit mindestens je einer asphärisch geformten optischen Fläche.

Das Dokument US 9,285,593 B1 beschreibt Verfahren und Vorrichtungen zur Formung eines TEM₀₀ Strahls, dessen Intensität gaußförmig oder nach einer ähnlichen Funktion verteilt ist, in eine homogene Strahldichteverteilung mit rundem oder quadratischem Querschnitt. In dem TEM₀₀ Strahl wird eine über den Strahlquerschnitt stetige Phasenverschiebung mittels eines phasentransformierenden optischen Systems eingeführt. Der transformierte Strahl wird mittels einer beugungsbegrenzten Optik mit positiver Brechkraft fokussiert.

Das Dokument US 5,864,430 A beschreibt ein Verfahren und eine Vorrichtung zur Abbildung eines Gaußstrahls in einen Zielpunkt mit homogener Strahldichteverteilung mittels der Fouriertransformationseigenschaft von Linsen. Ein Phasenelement prägt einem Eintrittsstrahl eine Entwurfsphase auf. Das nach einer Transformationslinse austretende optische Feld ist dann eine Fouriertransformierte des Eintrittsstrahls und der Phasenfunktion des Phasenelements. Der Durchmesser des Eintrittsstrahls kann mittels eines Teleskops angepasst werden. Die Größe des Zielpunktes sowie die Brennweite können durch Austausch der Transformationslinse angepasst werden. Die optische Qualität der Abbildung kann durch Austausch des Phasenelements angepasst werden.

Das Dokument DE 10 2008 048 323 B3 beschreibt ein modulares Laserbearbeitungssystem umfassend eine Vielzahl von Funktionsmodulen mit einem Strahldurchgangsbereich, die entlang eines Bearbeitungsstrahlengangs seriell verbindbar sind. Ein Funktionsmodul ist als Faseranschlussmodul zur Aufnahme eines Faserendes, aus dem der Bearbeitungslaserstrahl austritt, eingerichtet. Ein weiteres Funktionsmodul ist als Kollimatormodul mit einer Kollimatorlinse zur Kollimierung des Bearbeitungslaserstrahls eingerichtet. Die Kollimatorlinse ist aus einer Gruppe von Kollimatorlinsen unterschiedlicher Brennweite ausgewählt.

Das Dokument DE 20 2004 013 136 U1 beschreibt eine Lichtwellenoptik mit einer Fokussieroptik und einem Lichtleiteranschluss für einen Lichtwellenleiter zur Verbindung mit einer externen Strahlquelle. Die Lichtwellenoptik ist modular ausgebildet und weist mindestens einen Grundträger mit dem Lichtleiteranschluss und mit einem wechselbaren Optikmodul auf.

Das Dokument US 2012/0206786 A1 beschreibt ein optisches System zur Strahl- und Wellenfrontformung umfassend eine Intensitätsanpassungslinse zur Fokussierung und Modulierung der Strahldichteverteilung von Laserlicht in eine gewünschte Intensitätsdichteverteilung, einen Lichtmodulator zur Modulation des von der Intensitätsanpassungslinse abgegebenen Laserlichts derart, dass eine Wellenfront geformt wird, und Strahlweitenanpasser, der zwischen der Intensitätsanpassungslinse und dem Lichtmodulator angeordnet und für die Aufweitung oder Beschränkung des von der Intensitätsanpassungslinse abgegebenen Laserlichts eingerichtet ist.

Der Erfindung liegt die Aufgabe zu Grunde, ein modulares optisches Baukastensystem anzugeben, das eine geringe Zahl von Bauelementtypen umfasst, die von einer bestimmten Eintrittsstrahlenverteilung und einer bestimmten Austrittsstrahlenverteilung unabhängig standardisiert bereitgestellt sind. Durch Kombination von Bauelementen gleicher und/oder verschiedener Bauelementtypen können optische Systeme gebildet werden, mit denen für eine große Zahl von Eintrittsstrahldichteverteilungen mit einem Gauß-Profil Austrittsstrahlen erzeugbar sind, die eine Strahldichteverteilung mit einem alternierendem Strahldichteprofil in einer austrittsseitig angeordneten Bildebene bewirken. Ferner liegt der Erfindung die Aufgabe zu Grunde, ein solches modulares optisches Baukastensystem so anzugeben, dass optische Bauelemente gleicher und/oder unterschiedlicher Bauelementtypen zur Bildung einer Vielzahl von optischen Baugruppen mit hochgenauer, beugungsbegrenzter optischer Wirkung leichter gegeneinander fixierbar und/oder optisch justierbar sind.

Die Aufgabe wird erfindungsgemäß gelöst durch ein modulares optisches Baukastensystem mit den Merkmalen des Anspruchs 1.

Vorteilhafte Ausgestaltungen der Erfindung sind Gegenstand der Unteransprüche. Das Baukastensystem umfasst als gefasste optische Bauelemente mindestens eine gefasste Phasenplatte und mindestens eine gefasste fokussierende Linse.

Gemäß der Erfindung ist die fokussicrcndc Linse als fokussicrcndc asphärische Linse ausgebildet. Die mindestens eine gefasste Phasenplatte ist so eingerichtet, dass sie mit mindestens einer im Strahlengang nachgeordneten gefassten asphärischen fokussierenden Linse zu einem fokussierenden Strahlformer verbindbar ist.

Ein solcher fokussierender Strahlformer transformiert zu einer optischen Achse kollimiertes Licht einer Wellenlänge und einer Eintrittsstrahldichteverteilung mit einem Gauß-Profil in eine Austrittsstrahldichteverteilung mit einem alternierenden Strahldichteprofil in mindestens einer Bildebene, die senkrecht zur optischen Achse liegt. Ein Strahldichteprofil erfasst den Strahldichteverlauf in einer Bildebene entlang einer Profilrichtung senkrecht auf der optischen Achse. Ein alternierendes Strahldichteprofil weist entlang der Profilrichtung einen unimodalen, einen bimodalen oder einen Strahldichteverlauf auf, der in einem zentralen Bereich um die optische Achse näherungsweise konstant ist und beidseits dieses zentralen Bereichs steil auf Null abfällt.

Das Baukastensystem umfasst ferner mindestens einen Strahlaufweiter zur beugungsbegrenzten Veränderung des Durchmessers eines zur optischen Achse kollimierten Strahlenbündels monochromatischen Lichts der gleichen Wellenlänge. Die gefassten optischen Bauelemente sind jeweils in einem hülsenförmigen, koaxial zur optischen Achse angeordneten Gehäuse gefasst, wobei konzentrisch zur optischen Achse an einem ersten Ende des Gehäuses ein ringförmiger erster Anschlag und ein erstes Feingewinde sowie an einem gegenüberliegenden zweiten Ende des Gehäuses ein ringförmiger zweiter Anschlag und ein zweites Feingewinde angeordnet sind. Die Anschläge und die Feingewinde sind passend geformt und angeordnet, so dass das zweite Feingewinde eines ersten gefassten optischen Bauelements mit dem ersten Feingewinde eines zweiten optischen Bauelements bis in eine Anschlagposition verschraubbar ist, in welcher der zweite Anschlag des Gehäuses des ersten optischen Bauelements den ersten Anschlag des Gehäuses des zweiten optischen Bauelements kontaktiert. In dieser Anschlagposition sind die verschraubten gefassten optischen Bauelemente so ausgerichtet, dass ihre optischen Achsen innerhalb der beugungsbegrenzten Divergenz fluchten.

In einer Ausführungsform der Erfindung ist mindestens ein Strahlaufweiter für eine Anordnung im Strahlengang eines fokussierenden Strahlformers zwischen einer gefassten Phasenplatte und einer fokussierenden asphärischen Linse eingerichtet. Mittels des zwischen der Phasenplatte und der fokussierenden asphärischen Linse angeordneten Strahlaufweiters kann der aus der Phasenplatte austretende Strahldurchmesser an den optisch wirksamen Durchmesser der fokussierenden asphärischen Linse angepasst werden. Ein Vorteil dieser Ausführungsform besteht darin, dass durch die Hinzunahme und Anordnung des Strahlaufweiters fokussierende Strahlformer für verschiedene Durchmesser von kollimierten Eingangsstrahlenbündeln gebildet werden können. Somit ist es möglich, mit einer sehr kleinen Zahl unterschiedlicher gefasster optischer Bauelemente ein Baukastensystem für die Herstellung von fokussierenden Strahlformern herzustellen, die für besonders viele Anwendungen geeignet sind.

In einer Ausführungsform der Erfindung ist die fokussierende Linse eines fokussierenden Strahlformers in einem erfindungsgemäßen Gehäuse so gefasst und angeordnet, dass verschiedene Linsen unterschiedlicher Brennweite und numerischer Apertur leicht gegeneinander ausgetauscht und mit ein und derselben Phasenplatte kombiniert werden können. Dadurch ist es möglich, alternierende Strahldichteprofile verschiedener radialer Ausdehnung in Brennebenen mit verschiedenen Abständen oder Brennweiten durch einfachen Austausch der austrittsseitigen fokussierenden Linse zu erzeugen.

In vorteilhafter Weise erlaubt die erfindungsgemäße Anordnung optischer Bauelemente in Gehäusen die Herstellung von optischen Baugruppen durch einfaches Verschrauben. Damit entfallen weitere aufwändige Justageschritte und es kann zuverlässig durch Kombination der gefassten optischen Bauelemente eine Vielzahl von optischen Baugruppen mit hochgenauer, beugungsbegrenzter optischer Wirkung hergestellt werden.

Ein weiterer Vorteil des Baukastensystems besteht darin, dass durch Verschrauben eines fokussierenden Strahlformers mit mindestens einem, austrittsseitig zum fokussierenden Strahlformer angeordneten und ebenfalls in einem erfindungsgemäßen Gehäuse gefassten Strahlaufweiters die radiale Ausdehnung des alternierenden Strahldichteprofils leicht verändert werden kann.

Zudem ist es in vorteilhafter Weise möglich, mittels eines gefassten Strahlaufweiters den Durchmesser eines aus einer gefassten Phasenplatte austretenden Strahls an die im Strahlengang nachgeordnete gefasste fokussierende Linse anzupassen. Ein solcher, aus einer gefassten Phasenplatte, einem gefassten Strahlaufweiter und einer gefassten fokussierenden Linse bestehender fokussierender Strahlformer ermöglicht die Nutzung von fokussierenden Linsen mit einer möglichst kurzen Brennweite bei einer vorgegebenen numerischen Apertur und ermöglicht somit eine besonders kurze Baulänge.

Zudem kann die eintrittsseitig an einem fokussierenden Strahlformer angeordnete gefasste Phasenplatte mit mindestens einem eintrittsseitig angeordneten Strahlaufweiter verschraubt werden. Dadurch ist es leicht möglich, den Durchmesser eines eintretenden Strahls an die eintrittsseitig angeordnete Phasenplatte anzupassen.

Gemäß der Erfindung umfasst das Baukastensystem zusätzlich mindestens einen in einem Kollimatorgehäuse gefassten Faserkollimator mit einem Eintritt zur Einspeisung von monochromatischem Licht aus einer optischen Faser und einen Austritt zur Abgabe von längs der optischen Achse kollimiertem Licht. Die jeweils für den Faserkollimator, den fokussierenden Strahlformer und den mindestens einen Strahlaufweiter des Baukastensystems vorgesehenen Wellenlängenbereiche weisen mindestens einen Überlappungsbereich auf, in dem eine Kombination dieser optischen Bauelemente funktionsfähig ist. Konzentrisch zur optischen Achse sind am Austritt des Faserkollimators ein austrittsseitiger Anschlag und ein austrittsseitiges Feingewinde so angeordnet, dass das austrittsseitige Feingewinde des Faserkollimators mit dem ersten Feingewinde eines in einem Gehäuse gefassten zweiten optischen Bauelements bis in eine Anschlagposition verschraubbar ist, in welcher der austrittsseitige Anschlag des Faserkollimators den ersten Anschlag des zweiten optischen Bauelements kontaktiert und so ausrichtet, dass die optischen Achsen des Faserkollimators und des zweiten Bauelements innerhalb der beugungsbegrenzten Divergenz fluchten.

In vorteilhafter Weise erlaubt diese Ausführungsform die Einspeisung von Licht aus einer Laserquelle in eine aus verschraubten optischen Bauelementen gebildete optische Baugruppe ohne weitere Justierung.

Bei einer Ausführungsform der Erfindung ist der Faserkollimator justierbar ausgeführt. Die Kombination eines solchen justierbaren Faserkollimators mit einem gefassten fokussierenden Top-Hat-Strahlformer und optional mit einem oder mehreren gefassten Strahlformern ist vorteilhaft, da die Justage einer daraus gebildeten optischen Baugruppe besonders einfach ist.

Bei einer Ausführungsform der Erfindung weist ein erster Strahlaufweiter eine Vergrößerung von 1,5 auf, ein zweiter Strahlaufweiter eine Vergrößerung von 1,75 auf und ein dritter Strahlaufweiter eine Vergrößerung von 2,0 auf. Durch Verschrauben derartig abgestufter Strahlaufweiter lassen sich optische Baugruppen zur Strahlaufweitung über einen großen Bereich von Gesamtvergrößerungen und in feinen Abständen von Gesamtvergrößerungen ohne zusätzliche Justage herstellen.

Bei einer Ausführungsform der Erfindung umfasst das Baukastensystem mehrere Sätze von optischen Bauelementen, wobei ein Satz optischer Bauelemente für jeweils eine Wellenlänge eingespeisten monochromatischen Lichts vorgesehen ist. Dadurch ist die Bildung von optischen Baugruppen bei Erhalt der beugungsbegrenzten Abbildungsgenauigkeit auch für mehrere Wellenlängen mit einem Baukastensystem möglich.

Bei einer Ausführungsform der Erfindung umfasst das Baukastensystem zusätzlich umfassend mindestens einen Gewindeadapter mit einem jeweils konzentrisch und senkrecht zu einer Längsachse angeordneten ersten Anschlag und einem ersten Feingewinde sowie einem entlang der Längsachse gegenüberliegendem zweiten Anschlag und einem zweiten Feingewinde. Die Feingewinde des Gewindeadapters sind so geformt und angeordnet, dass sie mit einem Feingewinde eines Gehäuses eines gefassten optischen Bauelements bis in eine Anschlagposition verschraubbar sind, in welcher ein Anschlag des Gewindeadapters einen Anschlag des gefassten optischen Bauelements kontaktiert und so ausrichtet, dass die Längsachse des Gewindeadapters mit der optischen Achse des gefassten optischen Bauelements innerhalb der beugungsbegrenzten Divergenz des optischen Bauelements fluchtet.

Bei einer Ausführungsform eines Gewindeadapters sind dessen erstes und zweites Feingewinde sowie dessen erster und zweiter Anschlag passend zum ersten Feingewinde und passend zum ersten Anschlag eines erfindungsgemäßen Gehäuses geformt und angeordnet. Mittels einer solchen Ausführungsform eines Gewindeadapters ist es möglich, das erste Feingewinde eines ersten Gehäuses über den Gewindeadapter mit dem ersten Feingewinde eines zweiten Gehäuses zu verschrauben. So ist es beispielsweise möglich, das erste, üblicherweise eintrittsseitig angeordnete Feingewinde eines gefassten aufweitenden Strahlaufweiter entgegen der vorgesehenen Strahlrichtung über einen Gewindeadapter mit ersten Feingewinde eines gefassten fokussierenden Strahlformers zu verschrauben, so dass der Strahlaufweiter in dieser verschraubten Anordnung am Eintritt des fokussierenden Strahlformers strahlverengend wirkt.

Bei einer weiteren Ausführungsform eines Gewindeadapters sind dessen erstes und zweites Feingewinde sowie dessen erster und zweiter Anschlag passend zum zweiten Feingewinde und passend zum zweiten Anschlag eines erfindungsgemäßen Gehäuses geformt und angeordnet. Mittels einer solchen Ausführungsform eines Gewindeadapters ist es möglich, das zweite Feingewinde eines ersten Gehäuses über den Gewindeadapter mit dem zweiten Feingewinde eines zweiten Gehäuses zu verschrauben. So ist es beispielsweise möglich, das zweite, üblicherweise austrittsseitig angeordnete Feingewinde eines gefassten aufweitenden Strahlaufweiters entgegen der vorgesehenen Strahlrichtung über einen Gewindeadapter mit zweiten Feingewinde eines gefassten fokussierenden Strahlformers zu verschrauben, so dass der Strahlaufweiter in dieser verschraubten Anordnung am Austritt des fokussierenden Strahlformers strahlverengend wirkt.

In vorteilhafter Weise kann somit über den Gewindeadapter die Zahl der mit einem Baukastensystem herstellbaren unterschiedlichen optischen Systeme vervielfacht werden.

Ausführungsbeispiele der Erfindung werden im Folgenden anhand von Zeichnungen näher erläutert.

Darin zeigen:
- Figur 1A: schematisch den Strahlengang durch einen fokussierenden Strahlformer,
- Figur 1B: schematisch alternierende Strahldichteprofile in verschiedenen Bildebenen eines fokussierenden Strahlformers,
- Figur 2: schematisch einen in einem Gehäuse gefassten fokussierenden Strahlformer,
- Figur 3: schematisch den Strahlengang in einem Strahlaufweiter,
- Figur 4: schematisch einen in einem Gehäuse gefassten Strahlaufweiter,
- Figur 5: schematisch den Strahlengang in kaskadiert angeordneten Strahlaufweitern,
- Figur 6: schematisch einen in einem Gehäuse gefassten Faserkollimator
- Figur 7: schematisch einen justierbaren Faserkollimator sowie
- Figur 8: schematisch einen Gewindeadapter.

Einander entsprechende Teile sind in allen Figuren mit den gleichen Bezugszeichen versehen.

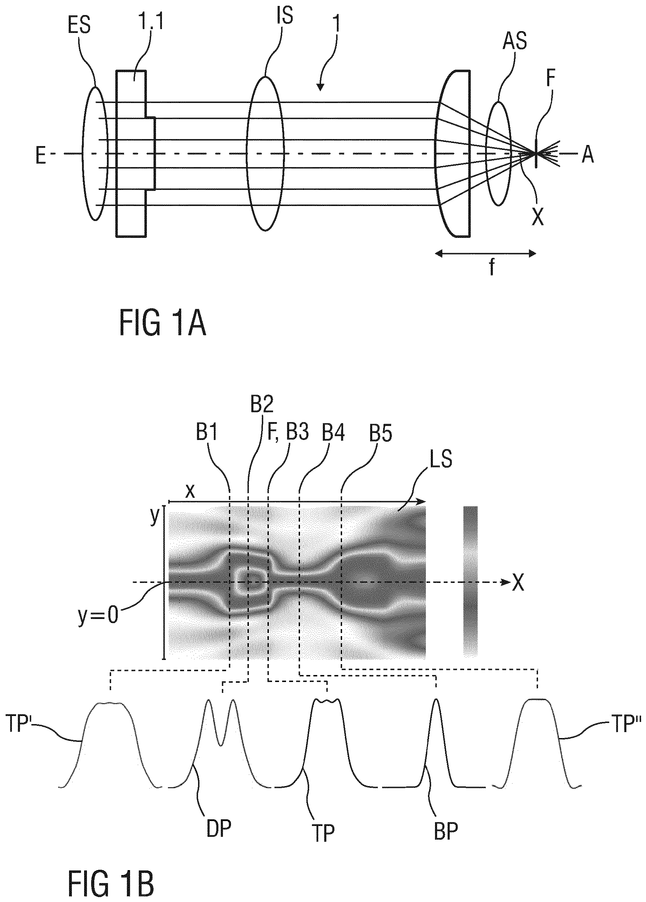

**Figur 1A** zeigt schematisch den Strahlengang durch einen fokussierenden Strahlformer 1 mit einem Eintritt E und einem Austritt A nach dem Stand der Technik. Eintrittsseitig ist eine Phasenplatte 1.1 angeordnet. Austrittsseitig ist eine asphärische fokussierende Linse 1.2 angeordnet.

Die Phasenplatte 1.1 ist so geformt, dass ein zur optischen Achse X kollimiertes Eintrittsstrahlenbündel ES in einem zentralen Bereich um die optische Achse X verzögert beziehungsweise phasenverschoben wird, wobei die erzielte Phasenverschiebung näherungsweise *π* beträgt. Dies bewirkt, dass die Strahldichte in dem aus der Phasenplatte 1.1 austretenden Strahlenbündel IS einem Airy-Profil folgt, welches mathematisch durch eine Besselfunktion erster Art und nullter Ordnung beschrieben ist, deren abhängige Variable der Abstand von der optischen Achse X ist. Derartige Phasenplatten 1.1 und Verfahren zu ihrer Konstruktion und Herstellung sind aus dem Stand der Technik bekannt.

Die fokussierende Linse 1.2 ist so geformt, dass die zur optischen Achse X kollimierten Strahlen im Strahlenbündel IS in einem austrittsseitigen Brennpunkt F beugungsbegrenzt fokussiert werden. Derartige asphärische fokussierende Linsen 1.2 sind aus dem Stand der Technik bekannt. Ebenfalls bekannt sind Verfahren zur Konstruktion solcher fokussierender Linsen 1.2 unter Berücksichtigung einer vorgegebenen Brennweite f.

Durch Fokussierung des nach dem Airy-Profil verteilten kollimierten Strahlenbündels IS entsteht bekanntermaßen in der den Brennpunkt F umfassenden Brennebene eine Strahldichteverteilung mit einem Top-Hat-Profil. Die Ausdehnung des kreisförmigen Innenbereichs des Top-Hat-Profils ist durch die Brennweite f der fokussierenden Linse 1.2 bestimmt. Die Steilheit des Abfalls der Strahldichte am Rand des Innenbereichs wird durch Beugung begrenzt.

Neben dem Top-Hat-Profil entstehen weitere alternierende Strahldichteprofile in Abhängigkeit vom Abstand x zum Brennpunkt F in Bildebenen B1 bis B5, wie in **Figur 1B** schematisch dargestellt. Die rotationssymmetrisch um die optische Achse X verteilte Strahldichte ist in einem Längsschnitt LS entlang der optischen Achse X dargestellt. Ein Strahldichteprofil entlang einer Profilrichtung y senkrecht zur optischen Achse X ist somit spiegelsymmetrisch zum auf der optischen Achse gelegenen Nullpunkt y=0.

In einer ersten, vor dem Brennpunkt F im Abstand x=x1<0 gelegenen Bildebene B1 weist das Strahldichteprofil die Form eines ersten Top-Hat-Profils TP' auf. In einem in Richtung des Brennpunkts F angrenzenden zweiten Abstand x=x2, x1<x2<0 weist das Strahldichteprofil in einer Bildebene B2 die Form eines bimodalen Strahldichteprofils oder Donut-Profils DP auf. In einer mit der Brennebene übereinstimmenden Bildebene B3 am Brennpunkt F im Abstand x=0 weist das Strahldichteprofil die Form eines zweiten Top-Hat-Profils TP auf, das im Vergleich zum ersten Top-Hat-Profil TP' steilere Flanken und einen schmaleren Bereich hoher Strahldichte aufweist.

In einem Abstand x=x4>0 nach dem Brennpunkt F liegt die Bildebene B4, in der das Strahldichteprofil die Form eines unimodalen Strahldichteprofils oder Beam-Waist-Profils BP aufweist. In einem weiteren Abstand x=x5>x4 weist das Strahldichteprofil in der Bildebene B5 die Form eines dritten Top-Hat-Profils TP" auf, das im Vergleich zum zweiten Top-Hat-Profil TP weniger steile Flanken und im Vergleich zum ersten Top-Hat-Profil TP' einen schmaleren Bereich hoher Strahldichte aufweist. In vorteilhafter Weise ist es somit möglich, durch Variation des Arbeitsabstandes entlang der optischen Achse X verschiedene Strahldichteverteilungen auf ein Objekt oder Werkstück zu projizieren, die für den jeweiligen Anwendungszweck bestmöglich geeignet sind.

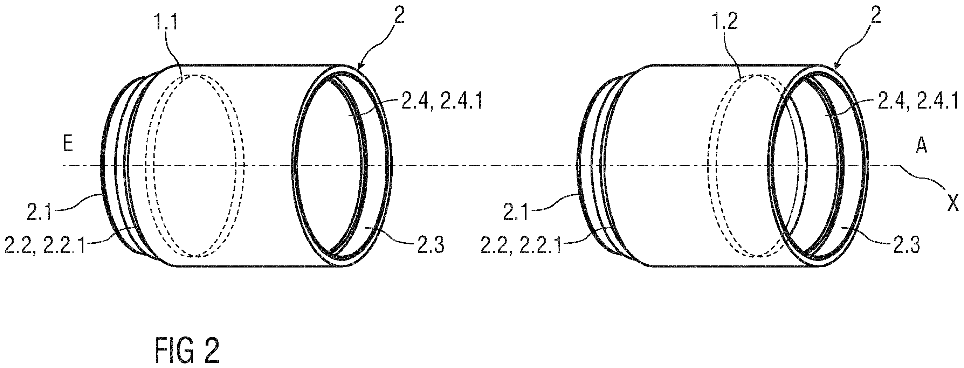

**Figur** 2 zeigt schematisch die Anordnung eines fokussierenden Strahlformers 1, mit einer Phasenplatte 1.1 und einer im Strahlengang nachgeordneten fokussierenden Linse 1.2. Die Phasenplatte 1.1 und die Linse 1.2 sind in je einem hülsenförmigen Gehäuse 2 gefasst.

Das Gehäuse 2 weist ein eintrittsseitiges erstes Feingewinde 2.1, einen ringförmigen eintrittsseitigen ersten Anschlag 2.2, ein austrittsseitiges zweites Feingewinde 2.3 und einen ringförmigen austrittsseitigen zweiten Anschlag 2.4 auf. Das eintrittsseitige erste Feingewinde 2.1 ist als Außengewinde geformt, an dessen zum Eintritt E weisendem Ende der eintrittsseitige erste Anschlag 2.2 angeordnet ist. Das austrittsseitige zweite Feingewinde 2.3 ist als Innengewinde geformt, an dessen zum Eintritt E weisendem Ende der austrittsseitige zweite Anschlag 2.4 als radialer Vorsprung in der Innenfläche des Gehäuses 2 angeformt ist.

Die Feingewinde 2.1, 2.3, die Anschläge 2.2, 2.4 sowie das Gehäuse 2 sind koaxial zur optischen Achse X angeordnet. Die Anschläge 2.2, 2.4 weisen jeweils ringförmige Anschlagflächen 2.2.1, 2.4.1 auf, die senkrecht zur optischen Achse X angeordnet sind. Die Feingewinde 2.1, 2.3 und die Anschläge 2.2, 2.4 sind korrespondierend geformt und angeordnet, so dass ein erstes und ein zweites Gehäuse 2 dadurch miteinander verschraubbar sind, dass das erste Feingewinde 2.1 des ersten Gehäuses 2 in das zweite Feingewinde 2.3 des zweiten Gehäuses 2 verschraubbar ist oder das zweite Feingewinde 2.3 des ersten Gehäuses 2 in das erste Feingewinde 2.1 des zweiten Gehäuses 2 verschraubbar ist.

In vorteilhafter Weise sind somit in Gehäusen 2 gefasste fokussierende Linsen 1.2 mit verschiedener Brennweite f und numerischer Apertur mit der gleichen, ebenfalls in einem Gehäuse 2 gefassten Phasenplatte 1.1 kombinierbar, wobei die Phasenplatte 1.1 eintrittsseitig zur Linse 1.2 verschraubt wird. Die gefassten fokussierenden Linsen 1.2 können als gefasste fokussierende asphärische Linsen ausgebildet sein. Mittels der gefassten fokussierenden Linsen 1.2 ist es möglich, fokussierende Strahlformer 1 mit einer geringen Anzahl unterschiedlicher Bauteile herzustellen, die alternierende Strahldichteprofile in Bildebenen B1 bis B5 um Brennebenen mit unterschiedlicher Brennweite f und in unterschiedlichen radialen Ausdehnungen in der jeweiligen Bildebene B1 bis B5 zu erzeugen.

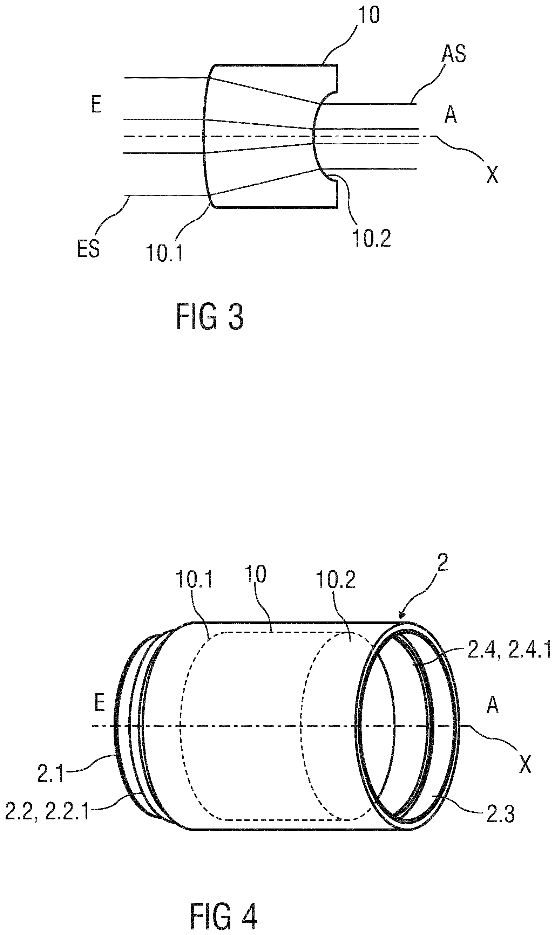

**Figur 3** zeigt schematisch den Strahlengang in einem Strahlaufweiter 10, der als einstückiges optisches Element mit einer eintrittsseitigen ersten optischen Fläche 10.1 und einer austrittsseitigen zweiten optischen Fläche 10.2 ausgeführt ist. Der Strahlaufweiter 10 bewirkt, dass ein Eintrittsstrahlenbündel ES in ein Austrittsstrahlenbündel AS transformiert wird. Das Austrittsstrahlenbündel AS weist einen gegenüber dem Eintrittsstrahlenbündel ES veränderten Durchmesser auf, aber die gleiche, auf diesen geänderten Durchmesser skalierte Strahldichteverteilung auf. Beugungsbegrenzte Strahlaufweiter 10, bei denen die optischen Flächen 10.1, 10.2 als asphärische Flächen ausgeführt sind, sind aus dem Stand der Technik bekannt.

**Figur 4** zeigt schematisch die Anordnung eines gefassten Strahlaufweiters in einem hülsenförmigen Gehäuse 2 zur Aufnahme des einstückigen optischen Elements mit den optischen Flächen 10.1, 10.2.

Das Gehäuse 2 gleicht dem in Figur 2 beschriebenen Gehäuse. Insbesondere weist es gleichartig geformte und angeordnete Feingewinde 2.1, 2.3 und Anschläge 2.2, 2.4 auf.

Somit sind jeweils in Gehäusen 2 angeordnete gefasste fokussierende fokussierende Strahlformer 1 und gefasste Strahlaufweiter 10 miteinander verschraubbar, wobei das austrittsseitige zweite Feingewinde 2.3 des fokussierenden Strahlformers 1 in das eintrittsseitige erste Feingewinde 2.1 des Strahlaufweiter 10 verschraubbar ist und wobei das das eintrittsseitige erste Feingewinde 2.1 des fokussierenden Strahlformers 1 in das austrittsseitige zweite Feingewinde 2.3 des Strahlaufweiters 10 verschraubbar ist.

Dabei sind zwei Gehäuse 2 so weit verschraubbar, bis die Anschlagflächen 2.2.1, 2.4.1 der Anschläge 2.2, 2.4 in einer Anschlagposition gegeneinander gepresst sind. Die Feingewinde 2.1, 2.3 sowie die Anschlagflächen 2.2.1, 2.4.1 sind so genau gefertigt und die optischen Elemente 1.1, 1.2, 10.1, 10.2 sind in den Gehäusen 2 so genau angeordnet, dass die optischen Achsen X eines in jeweils einem Gehäuse 2 angeordneten gefassten fokussierenden Strahlformers 1 und eines gefassten Strahlaufweiters 10 innerhalb der durch Beugungsbegrenzung bestimmten Toleranz fluchten. Mit anderen Worten: beim Verschrauben eines in je einem Gehäuse 2 gefassten fokussierenden Strahlformers 1 und eines Strahlaufweiters 10 bis zur Anschlagposition entsteht eine optische Baugruppe, bei der die Genauigkeit der optischen Funktion durch Beugung begrenzt ist.

Die erfindungsgemäße Gestaltung der Gehäuse 2 ermöglicht die Verschraubung eines gefassten fokussierenden Strahlformers 1 mit einem oder mit zwei gefassten Strahlaufweitern 10, so dass durch eintrittsseitige und/oder austrittsseitige Veränderung des Strahldurchmessers ein solcher fokussierender-Strahlformer 1 flexibel in verschiedenen optischen Aufbauten eingesetzt werden kann. In vorteilhafter Weise kann beispielsweise ein zu geringer eintrittsseitiger Strahldurchmesser auf den Durchmesser der Phasenplatte 1.1 aufgeweitet werden, indem ein Strahlaufweiter 10 eintrittsseitig vor die Phasenplatte 1.1 geschraubt wird. Durch Verwendung eines nachfolgend noch genauer erklärten Gewindeadapters 30 ist es auch möglich, die Durchstrahlrichtung eines Strahlaufweiters 10 umzukehren und somit einen zu großen eintrittsseitigen Strahldurchmesser zu verkleinern, indem ein Strahlaufweiter 10 entgegen der üblichen Durchstrahlrichtung mittels eines Gewindeadapters 30 eintrittsseitig vor die Phasenplatte 1.1 geschraubt wird.

In gleicher Weise kann ein Strahldurchmesser an den Durchmesser der im Strahlengang nachgeordneten Linse 1.2 angepasst werden, indem ein Strahlaufweiter 10, optional zur Umkehrung der Strahlrichtung unter Verwendung von zwei Gewindeadaptern 30, zwischen die gefasste Phasenplatte 1.1 und die gefasste Linse 1.2 geschraubt wird.

Dabei ist es ein Vorteil der Erfindung, dass keine weitere Justierung des fokussierenden Strahlformers 1 relativ zu dem mindestens einen Strahlaufweiter 10 erforderlich ist.

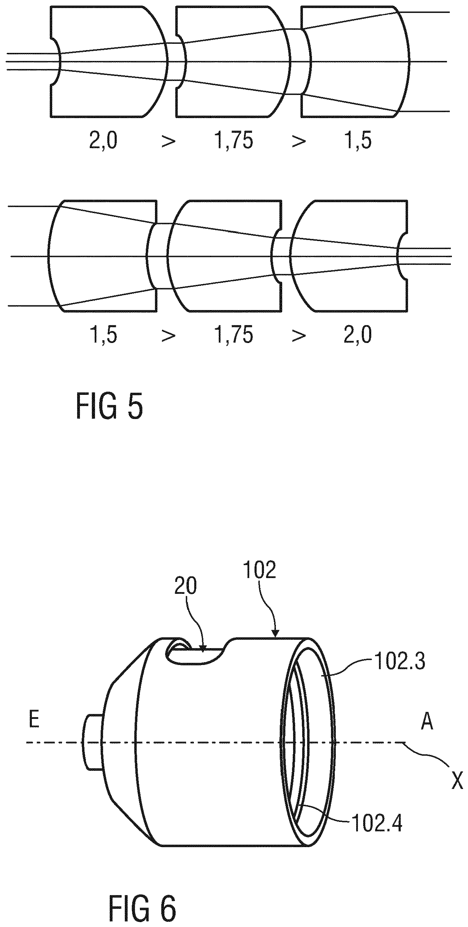

Strahlaufweiter 10 können, wie in **Figur 5** gezeigt, auch kaskadiert angeordnet werden, um eine größere Veränderung des Strahldurchmessers zu erzielen. In vorteilhafter Weise lassen sich in Gehäusen 2 gefasste Strahlaufweiter 10 dazu ohne weitere Justage verschrauben. In einer Ausführungsform der Erfindung sind die Feingewinde 2.1, 2.3 sowie die Anschlagflächen 2.2.1, 2.4.1 so genau gefertigt und die optischen Elemente 1.1, 1.2, 10.1, 10.2 in den Gehäusen 2 so genau angeordnet, dass die optischen Achsen X einer vorbestimmten Anzahl von kaskadierten gefassten Strahlaufweiter 10 innerhalb der durch Beugungsbegrenzung bestimmten Toleranz fluchten. Mit anderen Worten: beim Verschrauben einer vorbestimmten Anzahl von in je einem Gehäuse 2 gefassten Strahlaufweitern 10 entsteht eine optische Baugruppe mit einer Vergrößerung, die sich als Produkt aus den Vergrößerungen der einzelnen verschraubten Strahlaufweiter 10 ergibt und bei der die Genauigkeit der optischen Funktion durch Beugung begrenzt ist. In vorteilhafter Weise lassen sich so mit einer begrenzten Zahl von einzelnen gefassten Strahlaufweitern 10 durch Verschrauben Strahlaufweiter als optische Baugruppen herstellen, deren Vergrößerung über einen großen Bereich in sehr feiner Abstufung wählbar ist.

Bei einer Ausführungsform der Erfindung weisen Strahlaufweiter 10 eine Vergrößerung von 2,0, 1,75 oder 1,5 auf und werden so verschraubt, dass der Strahlaufweiter 10 mit der größten Vergrößerung an der Stelle mit dem kleinsten Strahldurchmesser angeordnet wird.

**Figur** 6 zeigt als weiteres optisches Bauelement schematisch einen in einem Gehäuse 102 gefassten Faserkollimator 20 mit einer eintrittsseitigen Faseraufhahme 20.4 zur Aufnahme einer optischen Faser. Der Faserkollimator 20 bewirkt, dass von der optischen Faser austretendes Licht in ein zur optischen Achse X kollimiertes Austrittsstrahlenbündel AS kollimiert wird. Faserkollimatoren 20 mit optischen Elementen, die mindestens teilweise asphärisch geformt sind und beugungsbegrenzt kollimierte Austrittsstrahlenbündel AS erzeugen, sind aus dem Stand der Technik bekannt.

Erfindungsgemäß ist der Faserkollimator 20 mit einem Kollimatorgehäuse 102 versehen, das ein austrittsseitiges Feingewinde 102.3 und einen austrittsseitigen Anschlag 102.4 aufweist, die passend zur einem eintrittsseitigen ersten Feingewinde 2.1 und einem eintrittsseitigen ersten Anschlag 2.2 des in Figur 2 beschriebenen Gehäuses 2 geformt und angeordnet sind. Somit kann der Faserkollimator 20 ebenfalls justagefrei mit einem gefassten fokussierenden Strahlformer 1 verschraubt werden. Optional können einer oder mehrere gefasste Strahlaufweiter 10 zwischen den gefassten Faserkollimator 20 und den gefassten fokussierenden Strahlformer 1 geschraubt werden.

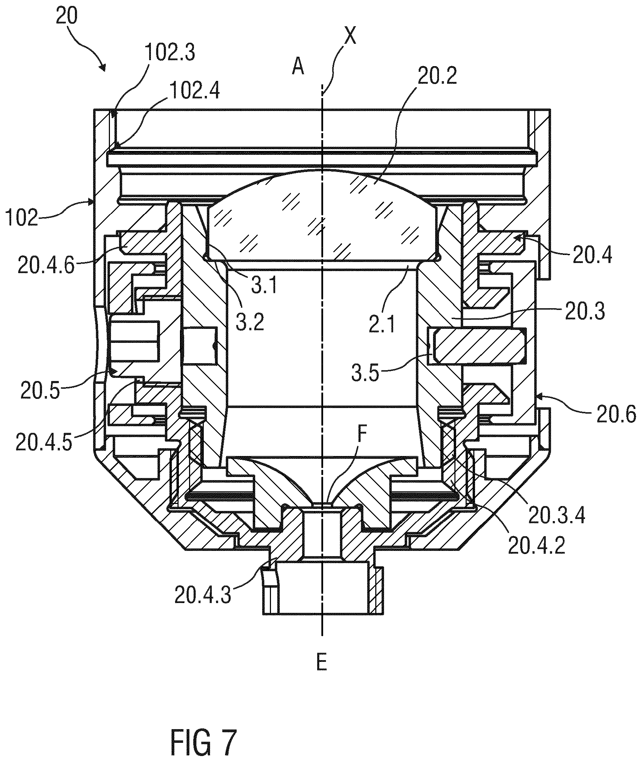

In einem Ausführungsbeispiel ist der Faserkollimator 20 als justierbarer Faserkollimator ausgebildet, der in der deutschen Patentanmeldung DE 10 2017 205 590.1 näher beschrieben und in **Figur 7** dargestellt ist. Der justierbare Faserkollimator 20 weist einen Eintritt E zur Einspeisung von Licht aus einer optischen Faser und einem Austritt A zur Abgabe von entlang der optischen Achse X kollimiertem Licht auf. Ein solcher justierbarer Faserkollimator umfasst ein Kollimatorgehäuse 102, in dem eine Sammellinse 20.2 gefasst ist, deren Brennpunkt F eingangsseitig auf der optischen Achse X liegt. Das Kollimatorgehäuse 102 weist ein austrittsseitiges Feingewinde 102.3 sowie einen austrittsseitigen Anschlag 102.4 auf.

Der justierbare Faserkollimator 20 umfasst ferner eine Fassung 20.3 mit einem Feingewinde 20.3.4 sowie eine die Fassung 20.3 konzentrisch aufnehmende hülsenförmige Faseraufnahme 20.4 mit einer Faserkupplung 20.4.3 zur Aufnahme der optischen Faser, mit einem radial nach außen auskragenden Fixieranschlag 20.4.6, mit einer Exzenteraufnahme 20.4.5 zur drehbaren Aufnahme einer exzentrischen Fixierschraube 20.5 im Hülsenmantel und mit einem auf der Innenseite des Hülsenmantels angeordneten Feingewinde 20.4.2, das im Feingewinde 20.3.4 der Fassung 20.3 geführt ist und das eine Drehbewegung um die optische Achse in eine Längsverschiebung der Faseraufnahme 20.4 entlang der optischen Achse relativ zur Fassung 20.3 umsetzt.

Ein justierbarer Faserkollimator 20 umfasst ferner eine die Faseraufnahme 20.4 ringförmig umschließende und hierzu drehbewegliche sowie zur Fassung 20.3 drehfeste Justageschale 20.6. Die Justageschale 20.6 umfasst eine gegen die Fassung 20.3 längsbewegliche Fixierhalbschale 20.6.2, die einen entlang des Umfangs ausgenommenen Fixierschlitz 20.6.2.2 zur Aufnahme des Schraubenkopfes 20.5.2 der Fixierschraube 20.5 aufweist. Die Justageschale 20.6 ist mittels der Fixierschraube 20.5 in einer Fixierposition haftreibend gegen den Fixieranschlag 20.4.6 gepresst und in einer Löseposition von diesem gelöst.

Die Kombination eines solchen justierbaren Faserkollimators 20 mit einem gefassten fokussierenden Strahlformer 1 und optional mit einem oder mehreren gefassten Strahlformern 10 ist vorteilhaft, da die Justage einer daraus gebildeten optischen Baugruppe besonders einfach ist.

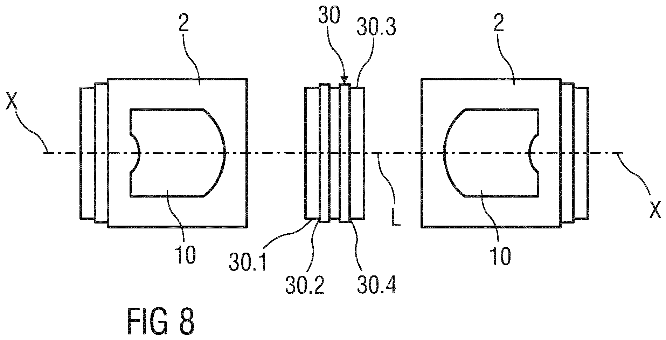

Figur 8 zeigt einen Gewindeadapter 30 für den Übergang von einem Innengewinde auf ein Außengewinde. Der Gewindeadapter 30 ist hülsenförmig entlang einer Längsachse L erstreckt geformt und weist an einem Ende ein als Außengewinde ausgebildetes erstes Feingewinde 30.1 und einen ersten Anschlag 30.2 auf. Am gegenüberliegenden Ende weist der Gewindeadapter 30 ein ebenfalls als Außengewinde ausgebildetes zweites Feingewinde 30.3 und einen zweiten Anschlag 30.4 auf. Die Feingewinde 30.1, 30.3 und die Anschläge 30.2, 30.4 sind passend zu dem als Innengewinde ausgebildeten zweiten Feingewinde 2.3, 102.3 und zu dem zweiten Anschlag 2.4, 102.4 eines Gehäuses 2, 102 geformt und angeordnet, so dass das jeweils ein Feingewinde 30.1, 30.3 des Gewindeadapters 30 mit dem zweiten Feingewinde 2.3, 102.3 jeweils eines ersten Gehäuses 2, 102 und eines zweiten Gehäuses 2 bis in eine Anschlagposition verschraubbar sind. In dieser Anschlagposition fluchtet die Längsachse L des Gewindeadapters 30 mit den optischen Achsen X der im ersten und im zweiten Gehäuse 2 gefassten optischen Bauelemente, welche beispielhaft als Strahlaufweiter 10 ausgeführt sind.

In analoger Weise können die Feingewinde 30.1, 30.3 als Innengewinde passend zum als Außengewinde ausgebildeten ersten Feingewinde 2.1 und die Anschläge 30.2, 30.4 korrespondierend zum ersten Anschlag eines Gehäuses 2 ausgeführt sein.

Der Gewindeadapter 30 erweitert die Zahl mit dem Baukastensystem herstellbarer optischer Baugruppen dadurch, dass durch Verschrauben des Gewindeadapters 30 mit einem in einem Gehäuse 2 gefassten optischen Bauelement dessen Strahlrichtung umgekehrt werden kann.

### BEZUGSZEICHENLISTE

- 1: fokussierender Strahlformer, optisches Bauelement
- 1.1: Phasenplatte
- 1.2: fokussierende Linse
- 2: Gehäuse
- 2.1,2.3: erstes, zweites Feingewinde
- 2.2, 2.4: erster, zweiter Anschlag
- 2.2.1, 2.4.1: Anschlagfläche
- 10: Strahlaufweiter, optisches Bauelement
- 10.1, 10.2: erste, zweite optische Fläche
- 20: Faserkollimator, optisches Bauelement
- 20.2: Sammellinse
- 20.3: Fassung
- 20.3.4: Feingewinde
- 20.4: Faseraufnahme
- 20.4.2: Feingewinde
- 20.4.3: Faserkupplung
- 20.4.5: Exzenteraufnahme
- 20.4.6: Fixieranschlag
- 20.5: Fixierschraube
- 20.5.2: Schraubenkopf
- 20.6: Justageschale
- 20.6.2: längsbewegliche Fixierhalbschale
- 20.6.2.2: Fixierschlitz
- 102: Kollimatorgehäuse
- 30: Gewindeadapter
- 30.1, 30.3: erstes, zweites Feingewinde
- 30.2, 30.4: erster, zweiter Anschlag
- 102.3: austrittsseitiges Feingewinde
- 102.4: austrittsseitiger Anschlag
- x: Abstand
- y: Profilrichtung
- A: Austritt
- AS: Austrittsstrahlenbündel
- E: Eintritt
- ES: Eintrittsstrahlenbündel
- F: Brennpunkt
- f: Brennweite
- L: Längsachse
- LS: Längsschnitt der Strahldichteverteilung
- X: optische Achse
- TP', TP, TP": erstes, zweites, drittes Top-Hat-Profil
- DP: Donut-Profil
- BP: Beam-Waist-Profil

## Patentansprüche

1. Baukastensystem umfassend als optische Bauelemente (1.1, 1.2, 10)
- mindestens eine Phasenplatte (1.1),
- mindestens eine asphärische fokussierende Linse (1.2) und
- mindestens einen Strahlaufweiter (10) zur beugungsbegrenzten Veränderung des Durchmessers eines zur optischen Achse (X) kollimierten Strahlenbündels monochromatischen Lichts der gleichen Wellenlänge,
welche jeweils in einem hülsenförmigen, koaxial zur optischen Achse (X) angeordneten Gehäuse (2) gefasst sind, wobei konzentrisch zur optischen Achse (X) an einem ersten Ende des Gehäuses (2) ein ringförmiger erster Anschlag (2.2) und ein erstes Feingewinde (2.1) sowie an einem zweiten Ende des Gehäuses (2) ein ringförmiger zweiter Anschlag (2.4) und ein zweites Feingewinde (2.3) so geformt und angeordnet sind, dass das zweite Feingewinde (2.3) eines ersten gefassten optischen Bauelements (1, 10) mit dem ersten Feingewinde (2.1) eines zweiten optischen Bauelements (1, 10) bis in eine Anschlagposition verschraubbar ist, in welcher der zweite Anschlag (2.4) des Gehäuses (2) ersten optischen Bauelements (1, 10) den ersten Anschlag (2.2) des Gehäuses (2) des zweiten optischen Bauelements (1, 10) kontaktiert und so ausrichtet, dass die optischen Achsen (X) des ersten und des zweiten optischen Bauelements (1, 10) innerhalb der beugungsbegrenzten Divergenz fluchten und wobei die mindestens eine gefasste Phasenplatte (1.1) so eingerichtet ist, dass sie mit einer im Strahlengang nachgeordneten asphärischen fokussierenden Linse (1.2) einen fokussierenden Strahlformer (1) zur Transformation von zur optischen Achse (X) kollimiertem Licht einer Wellenlänge und einer Eintrittsstrahldichteverteilung mit einem Gauß-Profil in eine Austrittsstrahldichteverteilung (LS) mit einem alternierenden Strahldichteprofil (TP, TP', TP", DP, BP) in mindestens einer Bildebene (B1 bis B5) bildet sowie zusätzlich umfassend als optisches Bauelement mindestens einen in einem Kollimatorgehäuse (102) gefassten Faserkollimator (20) mit einem Eintritt (E) zur Einspeisung von monochromatischem Licht der gleichen Wellenlänge aus einer optischen Faser und einem Austritt (A) zur Abgabe von längs der optischen Achse (X) kollimiertem Licht, wobei der Eintritt (E) an einer eintrittsseitigen, zur Aufnahme einer optischen Faser eingerichteten hülsenförmigen Faseraufnahme (20.4) mit einer Faserkupplung (20.4.3) angeordnet ist und wobei konzentrisch zur optischen Achse am Austritt (A) des Faserkollimators (20) ein austrittsseitiger Anschlag (102.4) und ein austrittsseitiges Feingewinde (102.3) so angeordnet sind, dass das austrittsseitige Feingewinde (102.3) des Faserkollimators (20) mit dem ersten Feingewinde (2.1) eines in einem Gehäuse (2) gefassten zweiten optischen Bauelements (1, 10) bis in eine Anschlagposition verschraubbar ist, in welcher der austrittsseitige Anschlag (102.4) des Faserkollimators (20) den ersten Anschlag (2.2) des zweiten optischen Bauelements (1, 10) kontaktiert und so ausrichtet, dass die optischen Achsen (X) des Faserkollimators (20) und des zweiten Bauelements (1, 10) innerhalb der beugungsbegrenzten Divergenz fluchten.

2. Baukastensystem nach Anspruch 1, **dadurch gekennzeichnet, dass** mindestens ein Strahlaufweiter (10) für eine Anordnung im Strahlengang eines fokussierenden Strahlformers (1) zwischen einer gefassten Phasenplatte (1.1) und einer fokussierenden asphärischen Linse (1.2) eingerichtet ist.

3. Baukastensystem nach Anspruch 1 oder 2, **dadurch gekennzeichnet, dass** in je einem Gehäuse (2) gefasste fokussierende Linsen (1.2) unterschiedlicher Brennweite (f) austauschbar mit einer Phasenplatte (1.1) zu einem fokussierenden Strahlformer (1) verbindbar sind.

4. Baukastensystem nach einem der vorhergehenden Ansprüche, **dadurch gekennzeichnet, dass** ein erster Strahlaufweiter (10) eine Vergrößerung von 1,5, ein zweiter Strahlaufweiter (10) eine Vergrößerung von 1,75 und ein dritter Strahlaufweiter (10) eine Vergrößerung von 2,0 aufweist.

5. Baukastensystem nach einem der vorhergehenden Ansprüche umfassend mehrere Sätze von optischen Bauelementen (1, 10, 20), wobei ein Satz optischer Bauelemente (1, 10, 20) für jeweils eine Wellenlänge eingespeisten monochromatischen Lichts vorgesehen ist.

6. Baukastensystem nach einem der vorhergehenden Ansprüche, zusätzlich umfassend mindestens einen Gewindeadapter (30) mit einem jeweils konzentrisch und senkrecht zu einer Längsachse (L) angeordneten ersten Anschlag (30.2) und einem ersten Feingewinde (30.1) sowie einem entlang der Längsachse (L) gegenüberliegendem zweiten Anschlag (30.4) und einem zweiten Feingewinde (30.3), wobei die Feingewinde (30.1, 30.3) des Gewindeadapters (30) mit einem Feingewinde (2.1, 2.3) eines Gehäuses (2) eines gefassten optischen Bauelements (1, 10) bis in eine Anschlagposition verschraubbar sind, in welcher ein Anschlag (30.2, 30.4) des Gewindeadapters (30) einen Anschlag (2.2, 2.4) des gefassten optischen Bauelements (1, 10) kontaktiert und so ausrichtet, dass die Längsachse (L) des Gewindeadapters (30) mit der optischen Achse (X) des gefassten optischen Bauelements (1, 10) innerhalb der beugungsbegrenzten Divergenz des optischen Bauelements (1, 10) fluchtet.

7. Baukastensystem nach Anspruch 6, **dadurch gekennzeichnet, dass** mindestens ein Gewindeadapter (30) für die Umkehrung der Strahlrichtung in dem mindestens einen Strahlaufweiter (10) vorgesehen ist.

## Claims

1. Modular system, comprising as optical components (1.1, 1.2, 10)
- at least one phase plate (1.1),
- at least one aspheric focusing lens (1.2) and
- at least one beam expander (10) for the diffraction-limited change of the diameter of a beam of monochromatic light having the same wavelength that is collimated to the optical axis (X),
which are mounted in each case in a tubular housing (2) arranged coaxially to the optical axis (X), wherein, concentrically to the optical axis (X), an annular first stop (2.2) and a first fine thread (2.1) are formed and arranged at a first end of the housing (2) and an annular second stop (2.4) and a second fine thread (2.3) are formed and arranged at a second end of the housing (2) in a manner such that the second fine thread (2.3) of a first mounted optical component (1, 10) can be screwed into the first fine thread (2.1) of a second optical component (1, 10) up to a stop position in which the second stop (2.4) of the housing (2) of the first component (1, 10) contacts the first stop (2.2) of the housing (2) of the second optical component (1, 10) and orients it such that the optical axes (X) of the first and of the second optical component (1, 10) are aligned within the diffraction-limited divergence and wherein the at least one mounted phase plate (1.1) is configured such that it forms with an aspheric focusing lens (1.2) arranged downstream in the beam path a focusing beam shaper (1) for transforming light having one wavelength, which is collimated to the optical axis (X), and an entry beam density distribution with a Gaussian profile into an exit beam density distribution (LS) with an alternating beam density profile (TP, TP', TP", DP, BP) in at least one image plane (B1 to B5), and additionally comprising as optical component at least one fibre collimator (20), which is mounted in a collimator housing (102) and has an entrance (E) for supplying monochromatic light having the same wavelength from an optical fibre and an exit (A) for outputting light collimated along the optical axis (X), wherein the entrance (E) is arranged at an entry-side, tubular fibre receptacle (20.4), configured for receiving an optical fibre, having a fibre coupling (20.4.3) and wherein, concentrically to the optical axis, an exit-side stop (102.4) and an exit-side fine thread (102.3) are arranged at the exit (A) of the fibre collimator (20) such that the exit-side fine thread (102.3) of the fibre collimator (20) can be screwed into the first fine thread (2.1) of a second optical component (1, 10) mounted in a housing (2) up to a stop position in which the exit-side stop (102.4) of the fibre collimator (20) contacts the first stop (2.2) of the second optical component (1, 10) and orients it such that the optical axes (X) of the fibre collimator (20) and of the second component (1, 10) are aligned within the diffraction-limited divergence.

2. Modular system according to Claim 1, **characterized in that** at least one beam expander (10) is configured for arrangement in the beam path of a focusing beam shaper (1) between a mounted phase plate (1.1) and a focusing aspheric lens (1.2).

3. Modular system according to Claim 1 or 2, **characterized in that** focusing lenses (1.2) of different focal lengths (f) which are mounted in each case in a housing (2) are interchangeably connectable to a phase plate (1.1) to form a focusing beam shaper (1).

4. Modular system according to any of the preceding claims, **characterized in that** a first beam expander (10) has a magnification of 1.5, a second beam expander (10) has a magnification of 1.75 and a third beam expander (10) has a magnification of 2.0.

5. Modular system according to any of the preceding claims, comprising a plurality of sets of optical components (1, 10, 20), wherein a set of optical components (1, 10, 20) is provided in each case for a wavelength of supplied monochromatic light.

6. Modular system according to any of the preceding claims, additionally comprising at least one thread adapter (30) having a first stop (30.2) arranged in each case concentrically and perpendicular to a longitudinal axis (L) and a first fine thread (30.1) and also a second stop (30.4) lying opposite along the longitudinal axis (L) and a second fine thread (30.3), wherein the fine threads (30.1, 30.3) of the thread adapter (30) can be screwed into a fine thread (2.1, 2.3) of a housing (2) of a mounted optical component (1, 10) up to a stop position in which a stop (30.2, 30.4) of the thread adapter (30) contacts a stop (2.2, 2.4) of the mounted optical component (1, 10) and orients it such that the longitudinal axis (L) of the thread adapter (30) is aligned with the optical axis (X) of the mounted optical component (1, 10) within the diffraction-limited divergence of the optical component (1, 10).

7. Modular system according to Claim 6, **characterized in that** at least one thread adapter (30) for reversing the beam direction is provided in the at least one beam expander (10).

## Revendications

1. Système modulaire comprenant comme composants optiques (1.1, 1.2, 10),
- au moins une plaque de phase (1.1)
- au moins une lentille de focalisation asphérique (1.2) et
- au moins un élargisseur de faisceau (10) destiné à modifier de manière limitée en diffraction le diamètre d'un faisceau de lumière monochromatique de même longueur d'onde qui est collimaté par rapport à l'axe optique (X),
lesquels sont maintenus chacun dans un boîtier en forme de manchon (2) qui est disposé coaxialement à l'axe optique (X), concentriquement à l'axe optique (X) une première butée annulaire (2.2) et un premier filet fin (2.1) étant formés et disposés à une première extrémité du boîtier (2) et une deuxième butée annulaire (2.4) et un deuxième filet fin (2.3) étant formés et disposés à une deuxième extrémité du boîtier (2) de sorte que le deuxième filet fin (2.3) d'un premier composant optique monté (1, 10) puisse être vissé au premier filet fin (2.1) d'un deuxième composant optique (1, 10) jusqu'à une position de butée dans laquelle la deuxième butée (2.4) du boîtier (2) du premier composant optique (1, 10) vienne en contact avec la première butée (2.2) du boîtier (2) du deuxième composant optique (1, 10) et l'oriente de telle sorte que les axes optiques (X) des premier et deuxième composants optiques (1, 10) soient alignés à l'intérieur de la divergence limitée en diffraction et l'au moins une plaque de phase montée (1.1) étant conçue de façon à former, avec une lentille de focalisation asphérique (1.2) disposée en aval dans le trajet de faisceau, un conformateur de faisceau focalisant (1) destiné à transformer la lumière, qui collimatée par rapport à l'axe optique (X), ayant une longueur d'onde et une distribution de densité de rayonnement d'entrée à profil gaussien en une distribution de densité de rayonnement de sortie (LS) ayant un profil de densité de rayonnement alterné (TP, TP', TP", DP, BP) dans au moins un plan image (B1 à B5) et comprenant en outre comme composant optique au moins un collimateur à fibre (20) monté dans un boîtier de collimateur (102) et pourvu d'une entrée (E) destinée à injecter une lumière monochromatique de même r longueur d'onde provenant d'une fibre optique et d'une sortie (A) destinée à délivrer de la lumière collimatée le long de l'axe optique (X), l'entrée (E) étant disposée au niveau d'un support de fibre côté entrée (20.4) en forme de manchon qui est conçu pour recevoir une fibre optique et qui est pourvu d'un accouplement de fibre (20.4.3) et une butée côté sortie (102.4) et un filet fin côté sortie (102.3) étant disposés concentriquement à l'axe optique au niveau de la sortie (A) du collimateur de fibre (20) de sorte que le filet fin côté sortie (102.3) du collimateur à fibre (20) puisse être vissé sur le premier filet fin (2.1) d'un deuxième composant optique (1, 10) monté dans un boîtier (2) jusque dans une position de butée dans laquelle la butée côté sortie (102.4) du collimateur à fibre (20) viennent en contact avec la première butée (2.2) du deuxième composant optique (1, 10) et l'oriente de telle sorte que les axes optiques (X) du collimateur à fibre (20) et du deuxième composant (1, 10) soient alignés à l'intérieure de la divergence limitée en diffraction.

2. Système modulaire selon la revendication 1, **caractérisé en ce qu'**au moins un élargisseur de faisceau (10) est conçu pour être disposé dans le trajet de faisceau d'un conformateur de faisceau focalisant (1) entre une plaque de phase montée (1.1) et une lentille de focalisation asphérique (1.2).

3. Système modulaire selon la revendication 1 ou 2, **caractérisé en ce que** des lentilles de focalisation (1.2) de différentes focales (f), montées dans un boîtier (2), peuvent être reliées de manière remplaçable à une plaque de phase (1.1) pour former un conformateur de faisceau focalisant (1).

4. Système modulaire selon l'une des revendications précédentes, **caractérisé en ce qu'**un premier élargisseur de faisceau (10) a un grossissement de 1,5, un deuxième élargisseur de faisceau (10) a un grossissement de 1,75 et un troisième élargisseur de faisceau (10) a un grossissement de 2,0.

5. Système modulaire selon l'une des revendications précédentes, comprenant une pluralité d'ensembles de composants optiques (1, 10, 20), un ensemble de composants optiques (1, 10, 20) étant prévu pour chaque longueur d'onde de lumière monochromatique injectée.

6. Système modulaire selon l'une des revendications précédentes, comprenant en outre au moins un adaptateur de filetage (30) pourvu d'une première butée (30.2), disposée concentriquement et perpendiculairement à un axe longitudinal (L), et d'un premier filetage fin (30.1) ainsi que d'une deuxième butée opposée (30.4) le long l'axe longitudinal (L) et d'un deuxième filet fin (30.3), les filets fins (30.1, 30.3) de l'adaptateur de filetage (30) pouvant être vissés sur un filet fin (2.1, 2.3) d'un boîtier (2) d'un composant optique monté (1, 10) jusqu'à une position de butée dans laquelle une butée (30.2, 30.4) de l'adaptateur fileté (30) vient en contact avec une butée (2.2, 2.4) du composant optique monté (1, 10) et l'oriente de telle sorte que l'axe longitudinal (L) de l'adaptateur fileté (30) soit aligné avec l'axe optique (X) du composant optique monté (1, 10) à l'intérieur de la divergence limitée en diffraction du composant optique (1, 10).

7. Système modulaire selon la revendication 6, **caractérisé en ce qu'**au moins un adaptateur fileté (30) est prévu pour inverser la direction du faisceau dans l'au moins un élargisseur de faisceau (10).
